Europäisches Patentamt

(19) European Patent Office

Office européen des brevets

(11) Publication number: **0 112 146**
**B1**

(12) **EUROPEAN PATENT SPECIFICATION**

(45) Date of publication of patent specification: **09.03.88**

(21) Application number: **83307544.3**

(22) Date of filing: **12.12.83**

(51) Int. Cl.⁴: **F 01 D 5/28**, F 01 D 5/04, C 04 B 37/00

(54) Radial blade type ceramic rotor and method of producing the same.

(30) Priority: **13.12.82 JP 218135/82**

(43) Date of publication of application:
**27.06.84 Bulletin 84/26**

(45) Publication of the grant of the patent:
**09.03.88 Bulletin 88/10**

(84) Designated Contracting States:
**DE FR GB IT SE**

(56) References cited:
**EP-A-0 052 913**
**WO-A-81/03047**
**DE-A-3 005 058**
**DE-B-1 207 851**
**US-A-3 655 482**
**US-A-3 854 189**
**US-A-4 347 089**
**US-A-4 408 959**

(73) Proprietor:- NGK INSULATORS, LTD.
2-56, Suda-cho, Mizuho-ku
Nagoya-shi, Aichi 467 (JP)

(72) Inventor: **Hayakawa, Issei**
**4 Sakuragaoka Yatomi-Cho**
**Mizuho-Ku Nagoya City (JP)**

(74) Representative: **Paget, Hugh Charles Edward**
**et al**
**MEWBURN ELLIS & CO. 2/3 Cursitor Street**
**London EC4A 1BQ (GB)**

Courier Press, Leamington Spa, England.

## Description

This invention relates to a radial blade type ceramic rotor, suitable for use for example in gas turbines or internal combustion engines, which comprises a ceramic blade portion and a ceramic shaft portion joined to each other, and further relates to a method of producing such a rotor.

Recently, silicon ceramic materials such as silicon nitride, silicon carbide, sialon and the like have been proposed as structural materials for parts of engines such as gas turbines, internal combustion engines and the like, because of their superior resistance to heat and thermal shock.

Some engine parts are however very complicated in shape. It is very difficult to make such parts only by one-step molding. On the other hand, since such an engine part is generally required to have different strengths at each location in the part, it has been proposed to manufacture such an engine part by joining together separate parts made of materials meeting the respective strength requirements for the various locations.

For example, US—A—3 854 189 discloses an axial type turbine rotor manufactured by the steps of making a blade portion from reaction-sintered silicon nitride, putting the blade portion in dies in a hot press and then forming a rotor portion in the dies adjacent the blade portion to form a unitary rotor. However, this process is expensive and not suitable for mass-production.

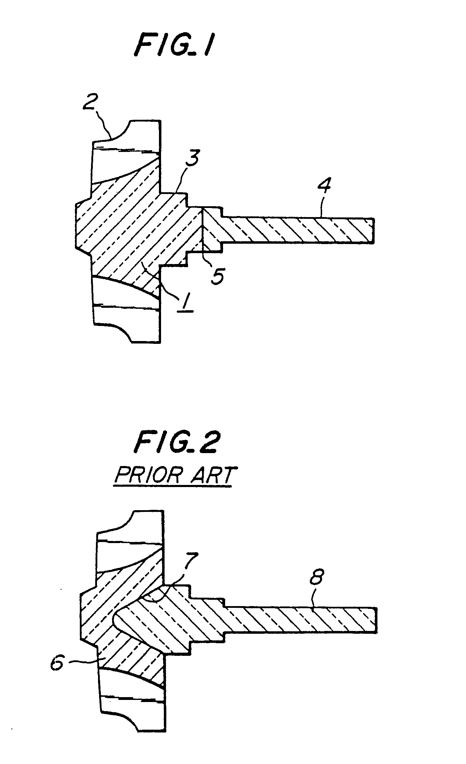

EP—A—52,913 shows a rotor, illustrated in Fig. 2 of the present drawing, comprising a rotor blade portion 6 formed with a frustoconical fitting recess 7 and a rotor shaft 8 having one end fitted and joined into the recess. The joint in the recess in the blade portion tends to reduce its strength because the joint portion lies in a highly stressed zone of the rotor when rotating, and cavities at the fitted end of the rotor shaft are likely to result.

It is an object of the invention to provide a radial type ceramic rotor which reduces or eliminates the above disadvantages of the prior art and in particular has a joint of the blade portion and a shaft portion of adequate strength which is easily formed.

It is mentioned here that WO 81/03047 discloses a method of making a ceramic radial blade turbine rotor in which the blades project radially from a body portion and a hub portion is provided projecting axially from the body portion. The hub portion is intended to be connected to a metal or ceramic turbine shaft, but this shaft and its mode of connection to the hub portion are not shown or described. The disclosure of this document is especially concerned with the use of a hollow central core in the body portion, and optionally in the hub portion, to allow the escape of gases formed by burn-out of a binder in the ceramic.

The radial type ceramic rotor according to the invention is set out in claim 1.

The method according to the invention is set out in claim 4.

Embodiments of the invention will be described below, by way of example, with reference to the accompanying drawings, in which:

Fig. 1 is a sectional view illustrating a ceramic rotor according to the invention; and

Fig. 2 is a sectional view showing the ceramic rotor of the prior art, discussed above.

A rotor according to the invention may be made of an oxide such as alumina or zirconia or of silicon nitride, silicon carbide or sialon or of a combination of two or more of these materials or substances producing these materials by sintering. The starting material preferably includes at least one sintering aid such as $Y_2O_3$, $Al_2O_3$, $MgO \cdot Al_2O_3$ $MgO$, $SrO$ and $CeO_2$ in case of silicon nitride or sialon, and such as B, C and AlN in case of silicon carbide, and should be sufficiently mixed. Thereafter, the material including the sintering aid may be fixed with a plasticizer such as a resin, wax or the like to obtain a raw material for molding. This raw material may then be injection-molded to form the desired shaped molded blade body of the rotor formed in one piece with at least part of a shaft.

The same raw material prepared in the same way may be separately injection-molded to obtain the molded shaft body of the rotor. As an alternative a raw material not containing the plasticizer may be formed into the shaft body of the rotor by slip casting, extruding, die pressing or another process conventionally used in ceramic forming. In this case, the materials of the blades and shaft bodies may not be the same. However, use of the same material is preferable in order to minimise the difference in thermal expansion.

Referring to Fig. 1 illustrating one embodiment of the invention, a molded blade body 1 comprises radial blades 2 and a part 3 of a shaft formed in one piece therewith, and is closely joined to a molded shaft body 4 at a close contact portion 5. To join the molded bodies 1 and 4, after the flat contact surfaces of the close contact portion 5 have been made smooth, the molded 1 bodies and 4 may be simply contacted or urged directly against each other or with a binder of heat meltable ceramic such as glass interposed between them. Most preferably, the molded bodies 1 and 4 are urged against each other with an interposed slurry or paste binder which is of the same material as at least one of the molded bodies 1 and 4.

The joining of the molded bodies is generally preferably effected between the raw molded bodies. However, at least one of the bodies may be presintered. When using a binder of heat meltable ceramic, sintered bodies may be joined. When using an interposed binder, the binder is preferably coated onto the surfaces so as to form a bond layer having a thickness less than 200 µm after sintering.

After the above treatment, the molded bodies closely contacted or urged against each other are covered by an elastic membrane and then subjected to hydrostatic pressure such that the molded or presintered bodies are shrunk in length, e.g. by an amount in the range 0.5—5%.

The pressure applied is usually in the range 500—5,000 kg/cm². The shrunk bodies are then sintered at a temperature in an atmosphere which is optimum for the molded bodies or binder to join the molded bodies into a unitary body.

The joint 5 of the unitary rotor is preferably located a distance from the rear surface of the blades (i.e. the end faces of the blades towards the shaft part of the rotor as seen in Fig. 1) which distance is in the range 10—100%, more preferably 30—100%, most preferably 30%—70% of the maximum blade diameter. If this distance is less than 30% of the maximum blade diameter, the joint may be too near to the blades, so as to be within a highly stressed zone of the rotor, tending to result in rupture at the joint portion when rotating. If this distance is more than 100% of the maximum blade diameter the joint is so remote from the blades that it may be difficult to achieve flow of the material into the shaft part of the blade body in the injection molding, resulting in comparatively large voids or poor uniformity in density in that part which reduces its strength.

A particular example of the invention will now be described.

A raw material for injection molding was prepared which contained 77 parts by weight of powder $Si_3N_4$ having an average particle diameter 0.5 μm, 2 parts by weight of SrO, 4 parts of MgO and 2 parts of $CeO_2$ as sintering aids and 15 parts of paraffin wax. The raw material was injection molded to form molded blade bodies for radial ceramic rotors, each having a maximum blade diameter of 50 mm (after firing) and having a shaft prt of length 25 mm extending from the rear surface of the blades. A raw material similar with the exception of having no paraffin wax was molded by a die press to form cylindrical molded shaft bodies each having an outer diameter 10 mm and a length 50 mm. After the molded blade bodies had been slowly heated to 550°C to remove the paraffin wax, the molded blade and shaft bodies were presintered by heating at 1,100°C for 30 minutes and the surfaces of these bodies to be joined were machined on a lathe to make them smooth. A powder consisting of $Si_3N_4$, SrO, MgO and $CeO_2$ whose proportions were the same as in the starting material of the molded bodies, i.e. 77:2:4:2 was mixed with methyl cellulose (3% by weight) and water (80% by weight) to form a slip having substantially the same composition as the starting material of the molded bodies. The slip was coated on the smooth surfaces of the molded bodies so as to obtain coated bonding layers having in each case a total thickness of 100 μm after sintering. After the molded blade and shaft bodies had been urged against each other at the smooth surfaces and dried, they were subjected to hydrostatic pressure of 1,500 kg/cm² to join them. Thereafter, the joined molded bodies were sintered in a nitrogen atmosphere at 1,700°C for one hour to obtain radial ceramic rotors completely joined in shaft regions according to the invention.

A rotor according to the invention thus formed was inspected by X-ray radiography. There were no defects inside the joint portion of the rotor. The ceramic rotors thus made according to the invention did not rupture even at rotating speeds as high as 150,000 RPM in spin tests.

Thus by the invention there can be made a rotor in which the joint is not located in a highly stressed zone and yet is sufficiently dense. The rotor is thus completely unitary part and can be of very high strength. It can be suitable as a turbocharger rotor or gas turbine rotor.

The term "radial blade type rotor" includes cases where the blades of the rotor deviate from truly radial.

## Claims

1. A radial blade type ceramic rotor comprising a ceramic blade body (1) and a ceramic shaft body (4) joined to each other so as to form a unitary rotor, wherein the blade body (1) is formed in one piece with a shaft portion (3) which is joined to the said shaft body (4), characterised in that the joint (5) of the shaft portion (3) and the shaft body (4) is an end-to-end joint at which axially facing flat contacting surfaces of the shaft portion (3) and the shaft body (4) are joined to each other and in that the joint (5) is at a distance which is in the range 30 to 100% of the maximum blade diameter from the surface of the blades of the blade body on the shaft side thereof.

2. A rotor according to claim 1, wherein the said distance is in the range 30% to 70% of the said maximum blade diameter.

3. A method of producing a radial blade type ceramic rotor according to claim 1 or claim 2, comprising the steps of molding a ceramic blade body (1), separately molding a ceramic shaft body (4), urging the blade body (1) and the shaft body (4) together, applying hydrostatic pressure to the blade and shaft bodies so urged together, and sintering the blade and shaft bodies to form a unitary rotor in which the blade and shaft bodies are joined, characterized in that said blade body (1) is formed in one piece with a shaft portion (3) and in said urging step said shaft portion and said shaft body are urged together end-to-end so that axially facing flat joint surfaces of the shaft portion and the shaft body contact each other, the joint formed at said axially facing joint surfaces being at a distance which is in the range 30 to 100% of the maximum blade diameter from the surface of the blades of the blade body on the shaft side thereof.

4. A method according to claim 3, wherein before said blade and shaft bodies are urged together, a binder is applied between the said joint surfaces of the bodies.

5. A method according to claim 4, wherein said binder is heat-meltable ceramic such as glass.

6. A method according to claim 4, wherein said binder is of the same material as at least one of the blade and shaft bodies.

7. A method according to any one of claims 4 to 6, wherein said binder is coated on said surfaces to be joined to form a bond layer having a thickness of less than 200 µm after sintering.

8. A method according to claim 7 wherein the thickness of said bond layer after sintering is approximately 100 µm.

9. A method according to any one of claims 3 to 8, wherein said hydrostatic pressure is applied to an extent such that said blade and shaft bodies (1, 4) are shrunk in length by an amount in the range 0.5—5%.

**Patentansprüche**

1. Keramischer Rotor der Radialschaufel-Bauart, bestehend aus einem keramischen Schaufelkörper (1) und einem keramischen Wellenkörper (4), die zur Bildung eines einheitlichen Rotors miteinander verbunden sind, wobei der Schaufelkörper (1) mit einem mit dem Wellenkörper (4) verbundenen Wellenbereich (3) einstückig ausgebildet ist, dadurch gekennzeichnet, daß die Verbindung (5) des Wellenbereichs (3) mit dem Wellenkörper (4) ein stumpfer Stoß ist, bei dem einander axial zugekehrte ebene Berührungsflächen des Wellenbereichs (3) und des Wellenkörpers (4) zusammengefügt sind, und daß die Verbindung (5) in einer Entfernung von der Oberfläche der Schaufeln des Schaufelkörpers auf dessen Wellenseite angeordnet ist, die im Bereich von 30 bis 100 % des maximalen Schaufeldurchmessers liegt.

2. Rotor nach Anspruch 1, wobei diese Entfernung im Bereich von 30 bis 70 % des maximalen Schaufeldurchmesser liegt.

3. Verfahren zur Herstellung eines keramischen Rotors der Radialschaufel-Bauart nach Anspruch 1 oder 2 mit den Schritten: Gießen eines keramischen Schaufelkörpers (1), getrenntes Gießen eines keramischen Wellenkörpers (4), Zusammenfügen des Schaufelkörpers (1) und des Wellenkörpers (4), Aufbringen eines hydrostatischen Druckes auf die so zusammengefügten Schaufelund Wellenkörper und Sintern der Schaufel- und Wellenkörper zur Bildung eines einheitlichen Rotors, dessen Schaufel- und Wellenkörper verbunden sind, dadurch gekennzeichnet, daß der Schaufelkörper (1) mit dem Wellenkörper (3) einstückig ausgebildet wird und daß der Wellenbereich und der Wellenkörper mit einem stumpfen Stoß zusammengefügt werden, so daß einander axial zugekehrte ebene Verbindungsflächen des Wellenbereichs und des Wellenkörpers einander berühren, wobei die an diesen einander axial zugekehrten Verbindungsflächen gebildete Verbindung in einer Entfernung von der Oberfläche der Schaufeln des Schaufelkörpers auf dessen Wellenseite angeordnet ist, die im Bereich von 30 bis 100 % des maximalen Schaufeldurchmessers liegt.

4. Verfahren nach Anspruch 3, wobei vor dem Zusammenfügen des Schaufelkörpers und des Wellenkörpers ein Bindemittel zwischen den Verbindungsflächen der Körper aufgebracht wird.

5. Verfahren nach Anspruch 4, wobei das Bindemittel ein bei Hitze schmelzbares Keramikmaterial, wie z.B. Glas ist.

6. Verfahren nach Anspruch 4, wobei das Bindemittel das gleiche Material wie mindestens eines der Schaufel- und Wellenkörper ist.

7. Verfahren nach einem der Ansprüche 4 bis 6, wobei die zusammenzufügenden Oberflächen mit dem Bindemittel beschichtet werden, um eine Klebeschicht zu bilden, die nach dem Sintern eine Dicke von weniger als 200 µm hat.

8. Verfahren nach Anspruch 7, wobei die Dicke der Klebeschicht nach dem Sintern ungefähr 100 µm beträgt.

9. Verfahren nach einem der Ansprüche 3 bis 8, wobei ein derartiger hydrostatischer Druck ausgebracht wird, daß die Schaufel- und Wellenkörper (1, 4) in der Länge um 0,5 bis 5 % schrumpfen.

**Revendications**

1. Rotor en céramique du type à pales radiales comprenant un corps à pales en céramique (1) et un corps d'arbre en céramique (4) joints l'un à l'autre afin de former un rotor unitaire, où le corps à pales (1) est formé en une pièce avec une portion d'arbre (3) qui est jointe audit corps d'arbre (4), caractérisé en ce que le joint (5) de la portion d'arbre (3) et du corps (4) de l'arbre est un joint bout à bout auquel les surfaces plates de contact axialement face à face de la portion d'arbre (3) et du corps d'arbre (4) sont jointes l'une à l'autre et en ce que le joint (5) est à une distance qui est comprise entre 30 et 100% du diamètre maximum des pales par rapport à la surface des pales du corps à pales du côté arbre.

2. Rotor selon la revendication 1, où ladite distance est comprise entre 30% et · 70% du diamètre maximum des pales.

3. Méthode de production d'un rotor en céramique du type à pales radiales selon la revendication 1 ou la revendication 2, comprenant les étapes de mouler un corps à pales en céramique (1), de mouler séparément un corps d'arbre en céramique (4), de solliciter le corps à pales (1) et le corps d'arbre (4) ensemble, d'appliquer une pression hydrostatique aux corps à pales et d'arbre ainsi sollicités l'un contre l'autre, et de fritter les corps à pales et d'arbre pour former un rotor unitaire où les corps à pales et d'arbre sont joints, caractérisé en ce que ledit corps à pales (1) est formé en une pièce avec une portion d'arbre (3) et dans ladite étape de sollicitation, ladite portion d'arbre et ledit corps d'arbre sont sollicités bout à bout de manière que les surfaces plates axialement face à face de jonction de la portion d'arbre et du corps d'arbre se contactent, le joint formé auxdites surfaces axialement face à face de jonction étant à une distance qui est comprise entre 30 et 100% du diamètre maximum des pales à partir de la surface des pales du corps à pales du côté arbre.

4. Méthode selon la revendication 3, où avant de solliciter ensemble lesdits corps à pales et d'arbre, un liant est appliqué entre lesdites surfaces de jonction des corps.

5. Méthode selon la revendication 4, où ledit liant est une céramique pouvant fondre à la chaleur telle que du verre.

6. Méthode selon la revendication 4, où ledit liant est de la même matière qu'au moins l'un desdits corps à pales et d'arbre.

7. Méthode selon l'une quelconque des revendications 4 à 6, où ledit liant est enduit sur lesdites surfaces à joindre pour former une couche de liaison d'une épaisseur de moins de 100 μm après frittage.

8. Méthode selon la revendication 7, où l'épaisseur de ladite couche de liaison après frittage est d'environ 100 μm.

9. Méthode selon l'une quelconque des revendications 3 à 8, où ladite pression hydrostatique est appliquée à une étendue telle que lesdits corps à pales et d'arbre (1, 4) soient rétrécis en longueur d'une quantité comprise entre 0,5 et 5%.

## FIG.1

## FIG.2

<u>PRIOR ART</u>